(19) Europäisches Patentamt
European Patent Office
Office européen des brevets

(11) **EP 4 372 614 A1**

(12) **EUROPEAN PATENT APPLICATION**

(43) Date of publication:
**22.05.2024 Bulletin 2024/21**

(21) Application number: 23208703.1

(22) Date of filing: **09.11.2023**

(51) International Patent Classification (IPC):
**G06N 3/042** (2023.01)    **G06N 5/01** (2023.01)
**G06N 3/0499** (2023.01)

(52) Cooperative Patent Classification (CPC):
**G06N 3/042; G06N 5/01;** G06N 3/0499

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.11.2022 KR 20220153494**

(71) Applicant: **Samsung SDS Co., Ltd.**
**Seoul (KR)**

(72) Inventors:
• **Shin, Jae Sun**
  **Seoul 05510 (KR)**
• **Lee, Min Young**
  **Seoul 05510 (KR)**

(74) Representative: **Glawe, Delfs, Moll**
  **Partnerschaft mbB von**
  **Patent- und Rechtsanwälten**
  **Postfach 13 03 91**
  **20103 Hamburg (DE)**

(54) **METHOD FOR PROCESSING GRAPH AND SYSTEM THEREFOR**

(57)    Provided are a method for processing a graph and system therefor. The method according to some embodiments may include calculating spectral information associated with a target graph, and generating an embedding representation of the target graph based on information on nodes constituting the target graph and the spectral information.

**FIG. 1**

**Description**

BACKGROUND

1. Technical Field

The disclosure relates to a method for processing a graph and system therefor, and more particularly, to a method for generating an embedding representation for a graph and performing various types of tasks using the generated embedding representation and system therefor.

2. Description of the Related Art

Graph embedding means transforming a given graph into a vector or matrix representation in an embedding space. Recently, research on how to embed a graph using a neural network has been actively conducted, and a neural network that handles a graph is referred to as a graph neural network (GNN).

Meanwhile, most of graph embedding techniques proposed so far generate an embedding representation of a given graph using a GNN that aggregates information of neighboring nodes (i.e., passes a message between nodes). However, the proposed techniques have an obvious limitation in that an embedding representation to which characteristics (information) of a graph are reflected is not generated. Accordingly, there is a problem in that performance is significantly degraded for tasks in which the structural characteristics of the graph are important.

SUMMARY

Aspects of the disclosure provide a method capable of accurately generating an embedding representation to which structural characteristics (information) of a graph are reflected, and a system for performing the method.

Aspects of the disclosure also provide a method capable of improving performance of various graph tasks (e.g., an isomorphic graph determination task) and a system for performing the method.

Aspects of the disclosure also provide a method capable of accurately extracting structural characteristics (information) from a given graph and a system for performing the method.

Aspects of the disclosure also provide a method capable of accurately aggregating different graph information (e.g., node information and spectral information) without loss and a system for performing the method.

However, aspects of the disclosure are not restricted to those set forth herein. The above and other aspects of the disclosure will become more apparent to one of ordinary skill in the art to which the disclosure pertains by referencing the detailed description of the disclosure given below.

According to some embodiments of the disclosure, there is provided a method for processing a graph performed by at least one computing device. The method may include calculating spectral information associated with a target graph, and generating an embedding representation of the target graph based on information on nodes constituting the target graph and the spectral information.

In some embodiments, the calculating of the spectral information may include deriving an ego-graph for at least some of the nodes from the target graph, and calculating spectral information of the ego-graph.

In some embodiments, the spectral information of the ego-graph may include at least one of an eigenvalue and an eigenvector of the ego-graph.

In some embodiments, the spectral information of the ego-graph may include angle information of the ego-graph.

In some embodiments, the calculating of the spectral information may include deriving an ego-graph for at least some of the nodes from the target graph, deriving a sub-graph from which an ego node is removed from the ego-graph, and calculating spectral information of the derived sub-graph.

In some embodiments, the generating of the embedding representation of the target graph may include performing repetitive node label updating according to Weisfeiler-Lehman (WL) algorithm based on the information on the nodes and the spectral information, and generating the embedding representation based on a final label of the nodes obtained through the node label updating.

In some embodiments, the target graph may include a first graph and a second graph, and the method may further include determining whether the first graph and the second graph are isomorphic graphs by comparing an embedding representation of the first graph and an embedding representation of the second graph.

In some embodiments, the generating of the embedding representation of the target graph may include aggregating the information of the nodes and the spectral information, and generating the embedding representation by inputting the aggregated information into a graph neural network (GNN).

In some embodiments, the spectral information may be information in a form of a multi-set comprising a plurality of spectral elements, and the aggregating of the information of the nodes and the spectral information may include transforming the spectral information through a neural network module that transforms data in a form of multi-set into data in a form of vector or matrix, and aggregating the transformed spectral information and the information on the nodes.

In some embodiments, the aggregating of the information of the nodes and the spectral information may include changing a value of any one of the information of the nodes and the spectral information by reflecting a specific value to any one of the information of the nodes and the spectral information, and aggregating any changed information and other information.

In some embodiments, the specific value may be an irrational number.

In some embodiments, the specific value may be a value based on a learnable parameter, and the method may further include predicting a label for a predetermined task based on the generated embedding representation, and updating the value of the learnable parameter based on a difference between the predicted label and a correct label.

In some embodiments, the reflecting of the specific value may be performed based on a multiplication operation, and the aggregating of any changed information and other information may be performed based on an addition operation.

In some embodiments, the aggregating may be performed based on a concatenation operation.

In some embodiments, the GNN may be a neural network configured to generate an embedding representation of a graph by aggregating information of neighboring nodes.

In some embodiments, the generating of the embedding representation of the target graph may include generating an intermediate embedding representation of the target graph by inputting the information of the nodes into a graph neural network (GNN), and generating the embedding representation by aggregating the intermediate embedding representation and the spectral information.

According to other embodiments of the disclosure, there is provided a system for processing a graph. The system may include one or more processors, and a memory configured to store one or more instructions, wherein the one or more processors, by executing the stored one or more instructions, perform: calculating spectral information associated with a target graph, and generating an embedding representation of the target graph based on information on nodes constituting the target graph and the spectral information.

According to yet other embodiments of the disclosure, there is provided a computer program coupled to a computing device and stored in a computer readable reading medium to execute operations including calculating spectral information associated with a target graph, and generating an embedding representation of the target graph based on information on nodes constituting the target graph and the spectral information.

According to yet other embodiments of the disclosure, there is provided a nontransitory computer readable reading medium storing a computer program executable by at least one processor to perform: calculating spectral information associated with a target graph; and generating an embedding representation of the target graph based on information on nodes constituting the target graph and the spectral information.

BRIEF DESCRIPTION OF THE DRAWINGS

The above and other aspects and features of the disclosure will become more apparent by describing in detail example embodiments thereof with reference to the attached drawings, in which:

FIGS. 1 and 2 are example views schematically illustrating an operation of a graph processing system according to some example embodiments of the disclosure;

FIG. 3 is an example flowchart illustrating a graph processing method according to some example embodiments of the disclosure;

FIG. 4 is an example view illustrating problems of the existing Weisfeiler-Lehman (WL) algorithm;

FIG. 5 is an example view illustrating reasons for calculating spectral information of an ego-graph in some example embodiments of the disclosure;

FIG. 6 is an example view illustrating reason for calculating angle information of an ego-graph in some example embodiments of the disclosure;

FIG. 7 is an example view illustrating a method of calculating spectral information according to some example embodiments of the disclosure;

FIG. 8 is an example view illustrating a method of transforming a multi-set form of spectral information into a vector or matrix form according to some example embodiments of the disclosure;

FIG. 9 is an example view illustrating a GNN-based graph embedding method according to some example embodiments of the disclosure;

FIG. 10 is an example view illustrating an aggregation method according to some example embodiments of the disclosure;

FIG. 11 is an example view illustrating an embedding learning process according to some example embodiments of the disclosure;

FIG. 12 is an example view illustrating a GNN-based graph embedding method according to some other example embodiments of the disclosure;

FIG. 13 is an example view illustrating a modified WL algorithm based graph embedding method according to some example embodiments of the disclosure;

FIG. 14 illustrates pseudo code of the modified WL algorithm based graph embedding method according to some example embodiments of the disclosure;

FIGS. 15 and 16 illustrate graphs used in performance experiments of a graph embedding method according to various example embodiments of the disclosure; and

FIG. 17 illustrates an example computing device capable of implementing a graph processing system according to some example embodiments of the disclosure.

DETAILED DESCRIPTION

Hereinafter, example embodiments of the disclosure will be described with reference to the attached drawings. Advantages and features of the disclosure and methods of accomplishing the same may be understood more readily by reference to the following detailed description of example embodiments and the accompanying drawings. The disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the disclosure will only be defined by the appended claims and their equivalents.

In adding reference numerals to the components of each drawing, it should be noted that the same reference numerals are assigned to the same components as much as possible even though they are shown in different drawings. In addition, in describing the disclosure, when it is determined that the detailed description of the related well-known configuration or function may obscure the gist of the disclosure, the detailed description thereof will be omitted.

Unless otherwise defined, all terms used in the present specification (including technical and scientific terms) may be used in a sense that may be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), may be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

Hereinafter, various example embodiments of the disclosure will be described in detail with reference to the accompanying drawings.

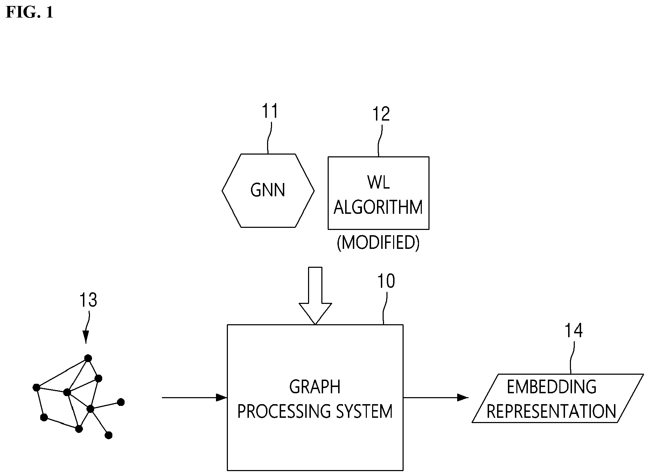

FIG. 1 is an example view schematically illustrating an operation of a graph processing system 10 according to some example embodiments of the disclosure.

As illustrated in FIG. 1, the graph processing system 10 may be a computing device/system that performs various processing on a graph 13. For example, the graph processing system 10 may generate an embedding representation 14 of the graph 13 by embedding the graph 13, and may perform a predetermined task (e.g., a classification task, a regression task, etc.) using the generated embedding representation 14. Hereinafter, for convenience of explanation, the graph processing system 10 will be abbreviated as "processing system 10".

The embedding representation 14 may mean a representation of a vector or matrix form for the graph 13. In this case, the matrix (e.g., a three-dimensional matrix) may encompass the concept of tensor. The embedding representation may be used interchangeably with terms such as "embedding vector", "embedding matrix", "embedding code", "latent representation", and "graph representation" depending on the cases (or forms).

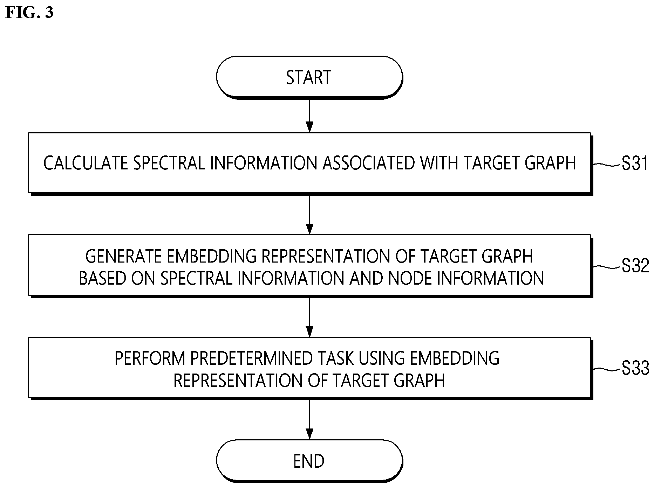

Specifically, the processing system 10 may generate an embedding representation 14 of a graph 13 using a graph neural network (GNN) 11 and/or a modified Weisfeiler-Lehman (WL) algorithm 12. In this case, the processing system 10 may generate the embedded representation of the graph 13 by calculating spectral information associated with the graph 13 and further using the calculated spectral information. In this way, the embedding representation 14 to which structural characteristics (information) of the graph 13 are reflected may be generated. This will be described in detail with reference to FIG. 3 and subsequent drawings.

The spectral information may include, for example, eigenvalue, eigenvector, and/or angle information. However, the scope of the disclosure is not limited thereto. For example, the spectral information may further include various characteristic information of a graph that may be derived from the illustrated information. The angle information of the graph may be calculated based on Equation 1 below, for example. Equation 1 means Equation for calculating angle information "$\alpha$" based on an adjacency matrix "A(G)" of a graph G having "n" nodes and "m" eigenvalues "$\mu$" ($\mu_1 > ... > \mu_m$)

In Equation 1, "$D_i$" is a diagonal matrix associated with an eigenvalue "$\mu_i$", and may mean a matrix in which a value of $(j,j)$ of "$D_i$" (that is, a value of a diagonal element) is "1" when a value of $(j,j)$ of matrix "$D$" is equal to "$\mu_i$". In addition, "$e_j$" means j-th standard basis, and "$\alpha_{ij}$" means angle information for "$\mu_i$" and the node "$v_j$" (that is, a magnitude value of a vector derived through multiplication of $P_i$ and $e_j$).

[Equation 1]

$$spectral\ decomposition\ of\ A(G) = UDU^T$$

$$P_i = UD_iU^T\ (if\ D(j,j) = \mu_i,\ D_i\,(j,j) = 1\ else\ D_i\,(j,j) = 0)$$

$$\alpha_{ij} = \left\|P_i e_j\right\|, where\ e_j \in \mathbb{R}^n$$

Those skilled in the art will already know the meaning and calculation method of the exemplified spectral information (e.g., eigenvalue, eigenvector, angle information). Therefore, more detailed description thereof will be omitted. Reference for a more detailed description of the exemplified spectral information is made to a spectral graph theory.

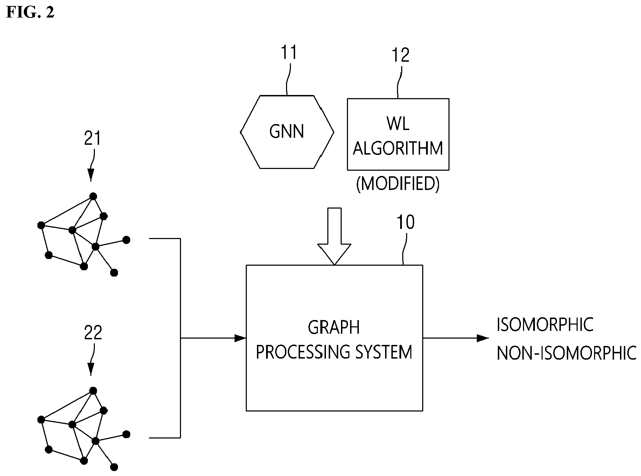

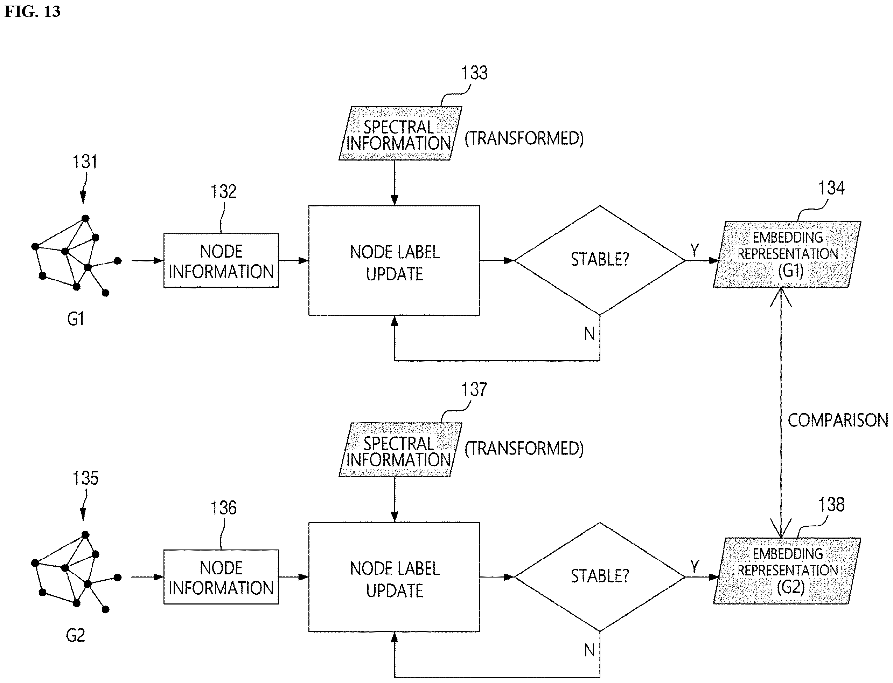

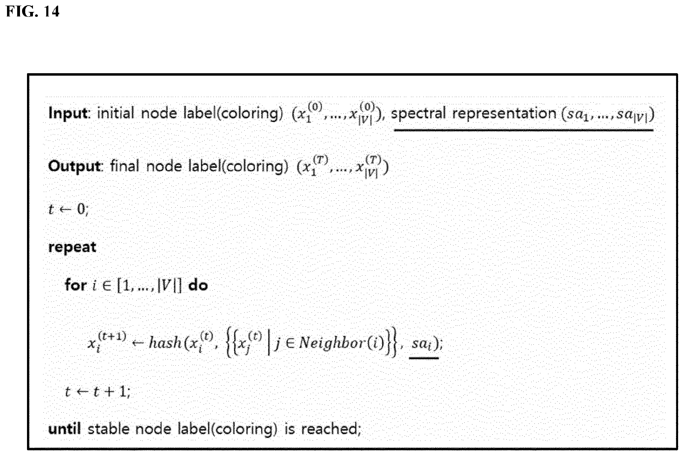

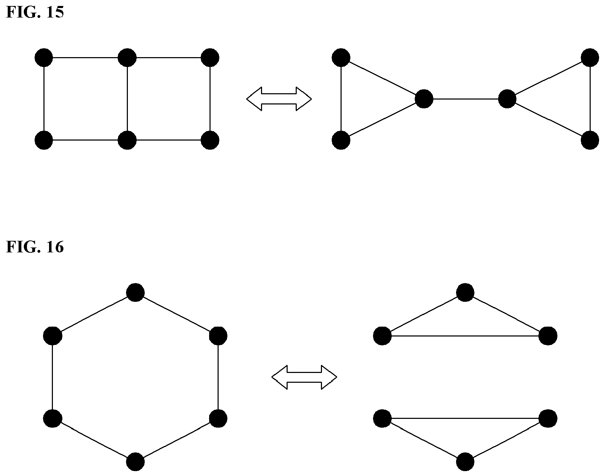

In addition, the processing system 10 may perform various graph tasks (e.g., classification tasks, regression tasks) by using the embedding representation 14. For example, as illustrated in FIG. 2, the processing system 10 may perform a task of determining whether two graphs 21 and 22 are isomorphic graphs (i.e., isomorphic determination task) using the GNN (11) and/or the modified WL algorithm 12. The processing system 10 may accurately distinguish graphs (see FIGS. 15 and 16) that the existing WL algorithm may not distinguish by using the embedding representation (e.g., 14) in which the spectral information is reflected. In this regard, reference is made to descriptions of FIGS. 13 and 14.

The processing system 10 may be implemented with at least one computing device. For example, all functions of the processing system 10 may also be implemented in one computing device, a first function of the processing system 10 may also be implemented in a first computing device, and a second function thereof may also be implemented in a second computing device. Alternatively, a specific function of the processing system 10 may also be implemented in a plurality of computing devices.

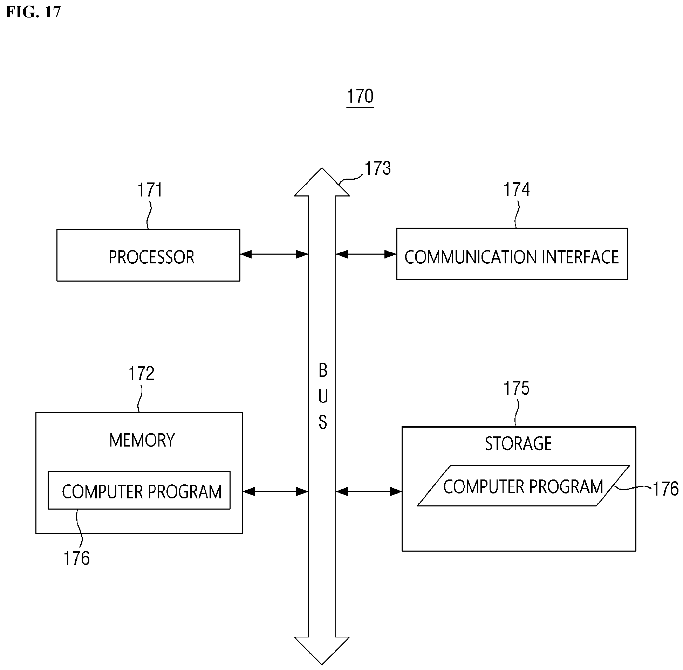

The computing device may include any device having a computing function, and reference for an example of such a device is made to FIG. 17. Since the computing device is an aggregate in which various components (e.g. memory, processor, etc.) interact, the computing device may be referred to as a "computing system" in some cases. In addition, the computing system may also refer to an aggregate in which a plurality of computing devices interact.

The above has schematically described the operation of processing system 10 in accordance with some example embodiments of the disclosure with reference to FIGS. 1 and 2. Hereinafter, various methods (i.e., detailed operations) that may be performed in the above-described processing system 10 will be described with reference to FIG. 3 and subsequent drawings. Hereinafter, for convenience of understanding, description will be continued on the assumption that all steps/operations of methods to be described later are performed in the processing system 10. Therefore, when a subject of a specific step/operation is omitted, it may be understood that the specific step/operation is performed in the processing system 10. However, in a real environment, some steps/operations of the methods to be described later may also be performed in other computing devices/systems.

In addition, hereinafter, for clarity of the disclosure, description will be continued while changing reference numerals such as GNN (11 in FIG. 1) according to example embodiments.

FIG. 3 is an example view schematically illustrating a graph processing method according to some example embodiments of the disclosure. However, this is only an example embodiment for achieving the object of the disclosure, and some steps may also be added or deleted as needed.

As illustrated in FIG. 3, a graph processing method according to example embodiments may start at step S31 of calculating spectral information associated with a target graph. Here, the target graph may mean a graph in a learning step (i.e., a graph belonging to a training set), and may also mean a graph of an inference step (i.e., an actual task performance step). In addition, it may refer to a plurality of graphs of the target graph.

The reason for calculating the spectral information is that structural characteristics (information) of the graph are implied in the spectral information. In other words, the spectral information such as eigenvalue may be calculated from an adjacent matrix of the graph, and the adjacency matrix includes the structural information of the graph as it is.

Therefore, the spectral information calculated from the adjacency matrix also includes the structural characteristics (information) of the corresponding graph.

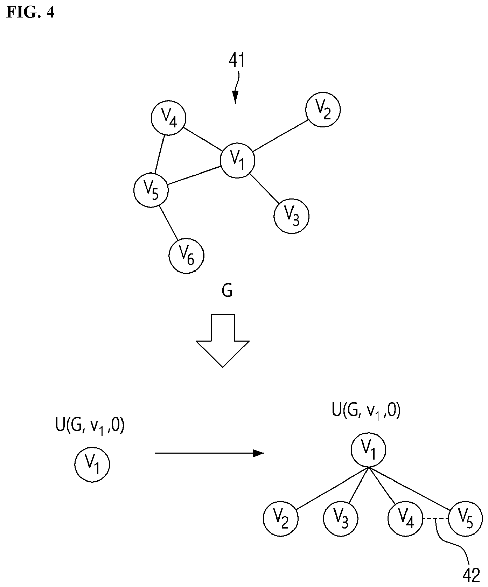

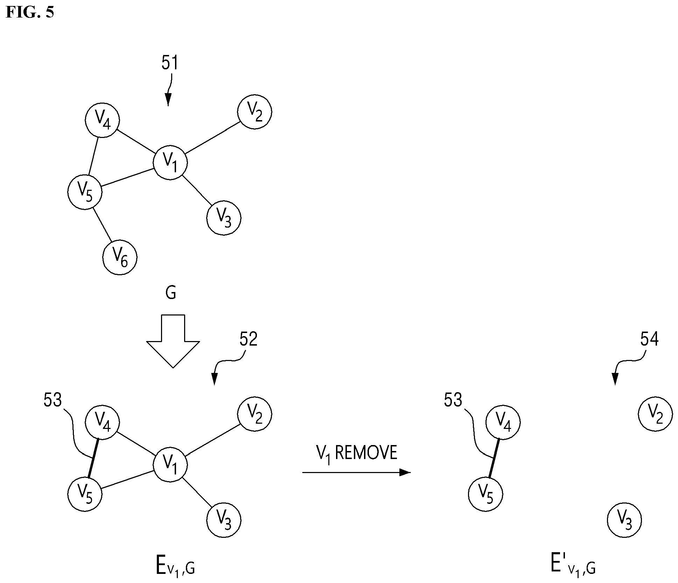

Meanwhile, a specific method of calculating spectral information in this step S31 may vary depending on the example embodiment. For example, the processing system 10 may extract the spectral information from an ego-graph for the target graph and a sub-graph (hereinafter referred to as "no-ego sub-graph") derived by removing ego nodes from the ego-graph. In order to provide more convenience of understanding, the reason for extracting the spectral information from the illustrated graphs will be further described with reference to FIGS. 4 and 5.

First, the operation method and problems of the existing WL algorithm will be described with reference to FIG. 4. For reference, in addition to the existing WL algorithm, the majority of GNNs (e.g., GIN, etc.) also generate embedding representations according to an operation method illustrated in FIG. 4 (i.e., a method of aggregating neighbor node information).

A basic operation of the WL algorithm is to update each node's label (i.e., node embedding representation) by iteratively aggregating labels (e.g., feature information) of neighboring nodes. For example, as illustrated in FIG. 4, it is assumed that a label of node "$v_1$" is updated in a graph 41 including six nodes. In this case, the WL algorithm updates the label of node "$v_1$" by concentrating (receiving) the labels of neighboring nodes (e.g., $v_2$ to $v_5$) of the node "$v_1$". Those skilled in the art will already know the WL algorithm, a more detailed description thereof will be omitted.

The problem with the above-described method is that connectivity information (see edge 42) between the neighboring nodes is lost during an aggregation (or embedding) process as aggregation is performed by concentrating only on information on the neighboring nodes. Since the connectivity information between the nodes is information directly related to the structural characteristics of the graph, the structural characteristics (information) of the graph may not be properly included in the embedding representation of the graph generated through the existing WL algorithm.

Based on the above, the reason for extracting the spectral information from the ego-graph and the no-ego sub-graph will be described.

FIG. 5 illustrates an ego-graph 52 and a sub-graph 54 for the node "vi" derived from the same graph 51 as in FIG. 4.

As illustrated in FIG. 5, it may be confirmed that the ego-graph 52 and the sub-graph 54 for node "vi" have connectivity information (see edge 53) that is lost in the existing WL algorithm. Therefore, when the graph 51 is embedded using the spectral information of the ego-graph 52 and/or the sub-graph 54, an embedding representation to which the structural characteristics (information) of the graph 51 are well reflected (that is, the expressive power is stronger) may be generated.

Hereinafter, various example embodiments of calculating the spectral information will be described.

In some example embodiments, an ego-graph for at least one node may be derived from the target graph, and spectral information may be calculated from the derived ego-graph. For example, the processing system 10 may derive an ego-graph for each node from the target graph (i.e., derive a graph with each node as an ego-node), and may calculate spectral information based on an adjacency matrix of the ego-graph for each node.

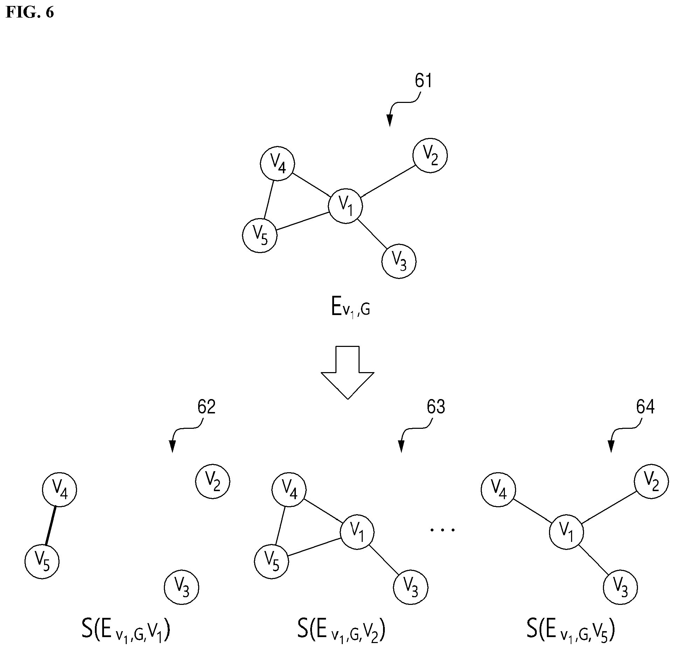

Alternatively, the spectral information of the ego-graph may include eigenvalue and angle information of the ego-graph. Eigenvalues of all sub-graphs from which one node is removed from the graph are implied in the eigenvalue and angle information of a specific graph. Therefore, if the two pieces of information are calculated as the spectral information, there is an advantage in that there is no need to calculate the eigenvalue of the no-ego sub-graph (that is, an effect of reducing computing cost). Further referring to FIG. 6, it may be confirmed that eigenvalues of sub-graphs (e.g., 62 to 64) from which one node is removed are implied in eigenvalue and angle information of an ego-graph 61 for the node "vi", and a no-ego sub-graph (see 62) for the node "vi" is included in the sub-graphs (e.g., 62 to 64). Therefore, if the eigenvalues and angle information of the ego-graph 61 are calculated, there is no need to separately calculate the eigenvalue of the no-ego sub-graph 62. For reference, the eigenvalue of the sub-graph 62 from which the node "vi" is removed from the ego-graph 61 may be derived from different eigenvalues of the ego-graph 61 and angle information of the node "vi" associated with the corresponding eigenvalues (e.g., angle information of the node vi associated with a first eigenvalue, angle information of the node vi associated with a second eigenvalue, etc.). In addition, since the eigenvalues of all sub-graphs from which one node is removed are implied in the angle information of the ego-graph, but the eigenvalue of the ego-graph itself is not implied, the eigenvalue of the ego-graph may also serve to supplement the angle information. According to the present example embodiment, the structural characteristics of the target graph may be more abundantly reflected to the embedding representation, and thus the embedding representation with stronger expressive power may be generated.

In some other example embodiments, an ego-graph for at least one node may be derived from the target graph, and no-ego sub-graph may be derived from the ego-graph. In addition, the spectral information may be calculated from the no-ego sub-graph. For example, the processing system 10 may derive the no-ego sub-graph for each node by deriving an ego graph for each node from the target graph and removing an ego node from the ego-graph for each node. In addition, the processing system 10 may calculate the spectral information based on the adjacent matrix of the no-ego sub-graph for each node.

In some still other example embodiments, spectral information associated with the target graph may be calculated based on various combinations of the above-described example embodiments. For example, the processing system 10 may also calculate eigenvalue of the ego-graph, eigenvalue of the no-ego sub-graph, angle information of the ego-graph, and angle information of the no-ego sub-graph as the spectral information.

The description will be provided with reference to FIG. 3 again.

In step S32, an embedding representation of the target graph may be generated based on the spectral information and the node information. Here, the node information may mean, for example, feature information (e.g., feature matrix) of a node, but the scope of the disclosure is not limited thereto. In this step S32, a specific method of generating the embedding representation of the target graph may vary depending on the example embodiment.

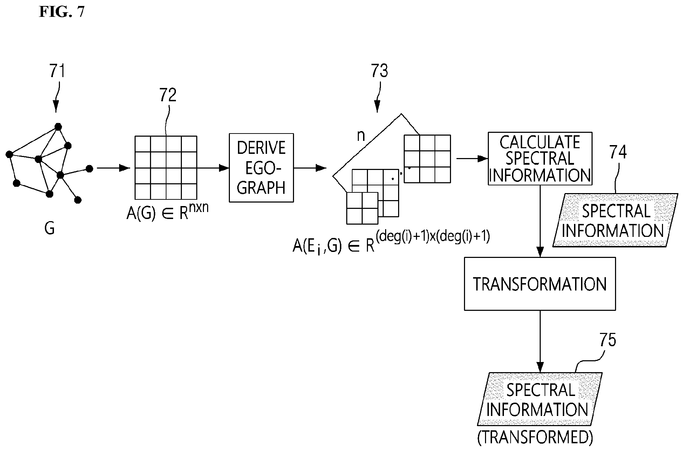

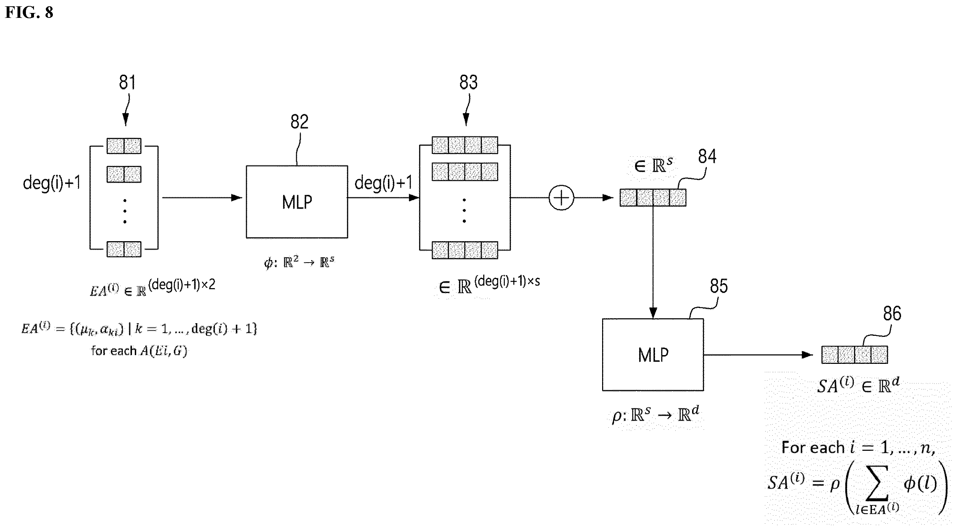

In some example embodiments, the spectral information may be information in a multi-set form including a plurality of spectral elements. In this case, the processing system 10 may transform the spectral information into vector or matrix-type information through a neural network module, and may generate an embedding representation of the target graph based on the transformed information and the node information. The present example embodiment will be further described later with reference to FIGS. 7 and 8.

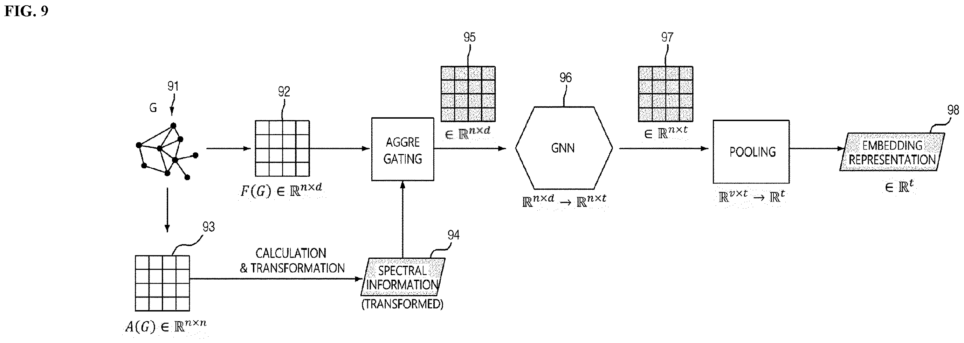

In some other example embodiments, an embedding representation of the target graph may be generated using a GNN. For example, the processing system 10 may generate an embedding representation of the target graph by inputting information in which the node information and the spectral information are aggregated to the GNN. Alternatively, the processing system 10 may generate an embedding representation of the target graph by aggregating the spectral information with an intermediate embedding representation obtained by inputting the node information into the GNN. The present example embodiment will be described in more detail later with reference to FIGS. 9 to 12.

In some still other example embodiments, an embedding representation of the target graph may be generated using a modified WL algorithm. For example, the processing system 10 may generate an embedding representation of the target graph by performing a modified WL algorithm based on the node information and the spectral information. The present example embodiment will be described in more detail later with reference to FIGS. 13 and 14.

In some still other example embodiments, an embedding representation may also be generated based on various combinations of the above-described example embodiments. For example, the processing system 10 may generate a first embedding representation using a GNN, generate a second embedding representation using a modified WL algorithm, and generate a final embedding representation of the target graph by aggregating two embedding representations.

In step S33, a predetermined task may be performed using the embedding representation of the target graph. Here, the task to be performed may be a classification task (e.g., an isomorphic determination task) or a regression task. A specific type of tasks to be performed may vary, and any task may be performed.

In some example embodiments, processing system 10 may perform an isomorphic determination task. That is, the processing system 10 may determine whether the first graph and the second graph are isomorphic graphs by generating the embedding representation of the first graph and the embedding representation of the second graph as described above and aggregating the two embedding representations. The present example will be described later with further reference to the descriptions of FIGS. 13 and 14.

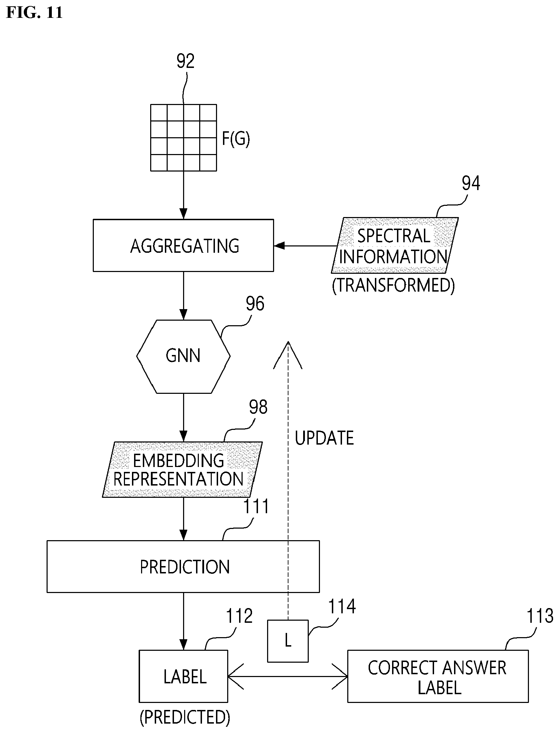

On the other hand, if the task is performed for embedding learning (e.g., embedding learning for GNN) (i.e., the learning step), the processing system 10 may update an embedding-related module and a value of a learnable parameter based on a difference between a result of performing the task and a correct answer. As such a process is repeatedly performed for a plurality of graphs, the embedding-related module (e.g., GNN, etc.) may be equipped with embedding capabilities for graphs. This will be described with further reference to the description of FIG. 11.

So far, the graph processing method according to some example embodiments of the disclosure has described with reference to FIGS. 3 to 6. As described above, the embedding representation of the target graph may be generated further based on the spectral information (e.g., eigenvalues, eigenvectors, angle information, etc.) associated with the target graph. Accordingly, the embedding representation to which the structural characteristics (information) of the target graph are reflected may be accurately generated. The embedding representation generated in this way may have stronger expressive power than the embedding representation generated through the GNN (e.g., GIN) using the existing WL algorithm or neighbor node information aggregation method, and may improve the performance of various graph tasks For example, the performance of the task of determining the isomorphism of the graphs may be greatly improved.

In addition, the spectral information may be calculated from the ego-graph for nodes constituting the target graph. Since the spectral information of the ego-graph includes abundant structural characteristics (information) of the target graph, the embedding representation to which the structural characteristics (information) of the target graph are reflected may be more accurately generated when the corresponding spectral information is used.

In addition, the spectral information may be calculated from the no-ego sub-graph. Since the spectral information of the no-ego sub-graph also includes abundant structural characteristics (information) of the target graph, the embedding representation to which the structural characteristics (information) of the target graph are reflected may be more accurately generated when the corresponding spectral information is used.

In addition, the eigenvalue and the angle information may be calculated as the spectral information from the ego-graph for the nodes constituting the target graph. Since the eigenvalue and angle information imply eigenvalues of all sub-graphs from which one node is removed, there is no need to separately calculate eigenvalue of the no-ego sub-graph by using the eigenvalue and angle information. Accordingly, the computing cost required to calculate the eigenvalue of the no-ego sub-graph may be reduced, and the embedding representation of the target graph may be more accurately generated.

Hereinafter, a method of calculating spectral information according to some example embodiments of the disclosure will be described with reference to FIG. 7. FIG. 7 illustrates a case of calculating spectral information (e.g., eigenvalue, angle information, etc.) from the ego-graph for each node as an example. For reference, in FIG. 7 and subsequent drawings, a square block means a "module" or "processing process of the corresponding module". For example, a "transformation block" may be understood to mean a "transformation module" or a "transformation process".

As illustrated in FIG. 7, it is assumed that a target graph 71 including n nodes (where n is a natural number greater than or equal to 1) is given. In this case, the processing system 10 may derive n ego-graphs (i.e., ego-graph for each node) from the target graph 71. For example, the processing system 10 may derive adjacent matrices 73 representing n ego-graphs from adjacent matrices 72 (e.g., an n x n matrix) of a target graph 71.

For reference, since the number of nodes for each ego-graph may vary, the adjacent matrices of the ego-graph may also have different sizes, and each ego-graph may have the degree of an ego node + 1 node (note that the size of the adjacent matrix is deg(i)+1 x deg(i)+1). In addition, in FIG. 7 and subsequent drawings, "A(G)" means an adjacent matrix of the graph "G", and "A(Ei, G)" means an adjacent matrix of the graph "G" and an ego-graph for a node "$v_i$".

Next, the processing system 10 may calculate spectral information 74 of the ego-graph for each node. For example, the processing system 10 may calculate eigenvalue and angle information of the corresponding ego-graph from the adjacent matrix 73 of the ego-graph for each node. However, the scope of the disclosure is not limited thereto.

Next, processing system 10 may transform the spectral information 74 into an appropriate form. Since such transformation is performed to aggregate the spectral information with node information, the processing system 10 may transform the spectral information 74 to be suitable for the form of the node information (see 75). If the transformation of spectral information is not required, the transformation process may be omitted.

In some example embodiments, the spectral information may be calculated in a multi-set form. For example, the processing system 10 may calculate eigenvalues and angle information of the corresponding ego-graph as many as the number of nodes of the ego-graph. In this case, information in the multi-set form having a pair (tuple) including eigenvalue and angle information as spectral elements may be calculated. Since those skilled in the art will already know that a plurality of eigenvalues and angle information are calculated from one graph, a description thereof will be omitted. In the present example embodiment, the processing system 10 may transform the spectral information into an appropriate form (e.g., vector or matrix) using a neural network module. Hereinafter, a transformation process will be further described with reference to FIG. 8.

FIG. 8 illustrates a process of transforming spectral information 81 of a multi-set form calculated from a specific ego-graph into a vector form. In FIG. 8, EA$^{(i)}$ means spectral information calculated from A(Ei, G) (i.e., the adjacent matrix of the graph "G" and the ego-graph for the node "$v_i$"), "$\mu$" means an eigenvalue, and "$\alpha$" means angle information. In addition, "deg(i)+1" means a value obtained by adding 1 to the degree of the ego node "$v_i$" in the ego-graph for the node "$v_i$", which may mean the number of nodes of the corresponding ego-graph.

As illustrated in FIG. 8, it is assumed that the processing system 10 has calculated a plurality (e.g., as many as the number of nodes) of eigenvalues and angle information from a specific ego-graph (e.g., from the adjacent matrix EA$^{(i)}$ of the ego-graph for "$v_i$"). In this case, the calculated spectral information 81 may be information of a multi-set form having "deg(i)+1" pairs (tuples) including eigenvalues and angle information as spectral elements.

Then, the processing system 10 may transform the spectral information 81 of the multi-set form through a neural network module configured to perform a first transformation operation (see 82), an addition operation, and a second transformation operation (see 85). FIG. 8 illustrates a case in which the first transform operation and the second transform operation are performed (implemented) through a multi-layer perceptron (MI,P) as an example (see 82 and 85). However, the scope of the disclosure is not limited thereto. However, in the following, description will be continued on the assumption that both transformation operations are performed (implemented) through the MI,Ps 82 and 85.

More specifically, the processing system 10 may perform the first transform operation on each of the spectral elements constituting the multi-set 81 through a first MLP 82 (see 83), and may aggregate (integrate) the spectral elements transformed through the addition operation into a vector (or matrix) form (see 84).

Next, the processing system 10 may perform the second transformation operation on the result of aggregation 84 through a second MLP 85. As a result of the second transformation operation, spectral information 86 of the vector (or matrix) form may be generated.

Since those skilled in the art will already know that a transformation module (function) having permutation invariant characteristics may be implemented through the addition operation and the two transformation operations, and the information of multi-set form may be transformed into the vector (or matrix) form through this, further description of FIG. 8 will be omitted.

So far, the method of calculating the spectral information according to some example embodiments of the disclosure has described with reference to FIGS. 7 and 8. As described above, the spectral information of the multi-set form may be accurately transformed into the information in the vector or matrix form.

Hereinafter, various example embodiments of the disclosure related to graph embedding will be described with reference to FIGS. 9 to 14.

First, a GNN-based graph embedding method according to some example embodiments of the disclosure will be described with reference to FIGS. 9 to 11. However, for clarity of the disclosure, descriptions of overlapping contents with those of the previous example embodiments will be omitted.

FIG. 9 is an example view illustrating a GNN-based graph embedding method according to some example embodiments of the disclosure.

As illustrated in FIG. 9, the present example embodiment relates to a method for generating an embedding representation 98 of a target graph 91 using a GNN 96.

Specifically, the processing system 10 may calculate spectral information 94 associated with the target graph 91 based on an adjacent matrix 93 of the target graph 91.

Next, the processing system 10 may aggregate the node information 92 and the spectral information 94 of the target graph 91. FIG. 9 assumes that the node information 92 is composed of d-dimensional feature vectors for each node.

The aggregation method may be, for example, concatenation, multiplication, addition, elementwise product, neural network (e.g., multilayer perceptron) based aggregation, or a combination thereof. However, the scope of the disclosure is not limited thereto.

In some example embodiments, the node information 92 and the spectral information 94 may be aggregated through a concatenation operation. In this case, the two pieces of information may be accurately aggregated without loss of information.

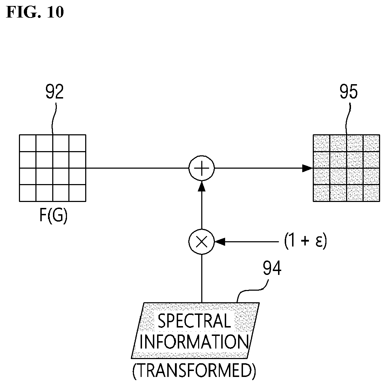

In some other example embodiments, after changing a value by reflecting a specific value to at least one of the node information 92 and the spectral information 94, the two pieces of information 92 and 94 may be aggregated. For example, as illustrated in FIG. 10, the processing system 10 may reflect a specific value (e.g., "1+ε") to the spectral information 94 through a multiplication operation (e.g., multiply each element of the embedding matrix by a specific value). Here, it may be understood that the reason for reflecting the specific value to the spectral information 94 is to prevent the values of the node information 101 and the spectral information 94 from being offset during the aggregation (e.g., addition operation) process. This is because the offset of the values means that some information (or expressive power) is lost during the aggregation process. In addition, the processing system 10 may aggregate the spectral information 94 and the node information 92 to which the specific value is reflected through an addition operation (see 95). FIG. 10 illustrates a case in which a specific value is reflected only to the spectral information 94 as an example, but the scope of the disclosure is not limited thereto. For example, the processing system 10 may also reflect the specific value to the node information 92 instead of the spectral information 94. Alternatively, the processing system 10 may reflect a first specific value to the node information 92 and reflect a second specific value (i.e., a value different from the first specific value) to the spectral information 94.

In the previous example embodiments, a specific method of deriving/generating a specific value may be designed in various ways.

For example, the specific value may be a preset value. For example, the specific value is a value based on a kind of hyperparameter (e.g., "ε"), and may be preset by a user. As a more specific example, the specific value may be set to an irrational number. This is because when one (or both) of the two pieces of information is multiplied by an irrational number, it is possible to effectively prevent the values of the two pieces of information from being offset during an aggregation (e.g., addition operation) process. For reference, it has been mathematically proven by the inventors of the disclosure that information loss may be prevented by aggregating two pieces of information using an irrational number based multiplication operation and addition operation.

As another example, the specific value may be a value derived based on a learnable parameter (e.g., when the learnable parameter is "ε", the specific value may be a value of ε itself, ε + irrational number, etc.). In this case, the processing system 10 may also update the value of the learnable parameter during the process of proceeding with embedding learning. By doing so, an optimal value capable of preventing loss of information (or expressive power) during the aggregation process may be naturally and accurately derived. This will be described with further reference to the description of FIG. 11.

The description will be provided with reference to FIG. 9 again.

The processing system 10 may aggregate the node information 92 and the spectral information 94 and input the aggregated information 95 to the GNN 96. In addition, the processing system 10 may generate a final embedding representation 98 by performing a pooling operation (e.g., addition, etc.) on an embedding representation 97 output from the GNN 96. In some cases, the pooling operation may be omitted. Those skilled in the art will already know the pooling operation used in the GNN field, and then a detailed description thereof will be omitted.

For reference, the pooling operation may also be performed by a pooling module positioned inside the GNN 96. In addition, in the art, the "pooling module" may be used interchangeably with terms such as a "pooling layer", a "readout layer", and a "readout module".

The GNN 96 may be, for example, a model that performs embedding in a method of aggregating neighboring node information (i.e., message passing method between nodes), but the scope of the disclosure is not limited thereto. An example of the illustrated model may include a graph isomorphism network (GIN). The GIN is a GNN that implements a node label update operation (i.e., hash operation) of the WL algorithm with multilayer perceptron, and is known as a model with the same expressive power as the WL algorithm. Those skilled in the art will already know the structure and operating principle of the GIN, and then a detailed description thereof will be omitted.

Meanwhile, although not illustrated in FIG. 9, the processing system 10 may learn the modules (e.g., GNN 96) and parameters necessary to generate the embedding representation 98 in a method of performing a predetermined task (i.e., a learning task). Specifically, as illustrated in FIG. 11, the processing system 10 may predict a label 112 for the target graph 91 by inputting the embedding representation 98 into a prediction module 111, or "prediction layer", specialized for a particular task. In addition, the processing system 10 may learn related modules/parameters (e.g., GNN 96, prediction module 111, parameter for deriving a specific value, etc.) based on a difference (e.g., loss 114) between the prediction label 112 and the correct answer label 113. Such a learning process may be repeatedly performed on a plurality of graphs (i.e., training set) given the correct answer label (e.g., 113).

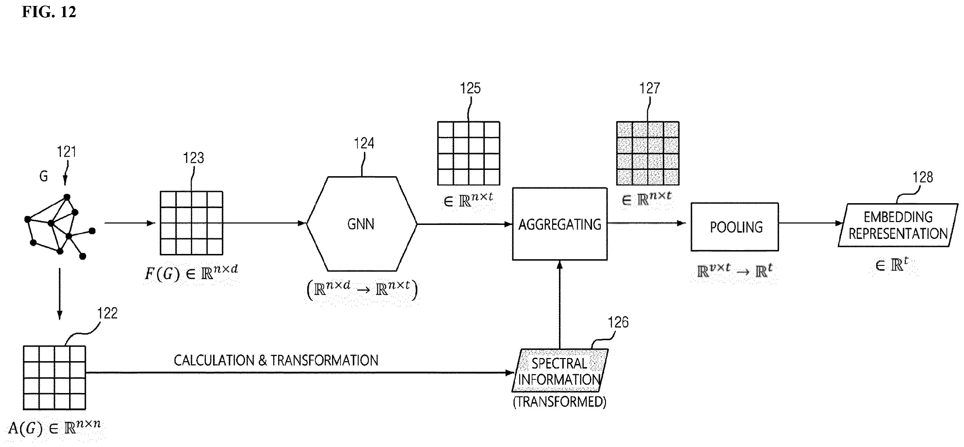

Meanwhile, FIGS. 9 and 11 illustrate as an example a case in which the spectral information 95 and the node information 92 are aggregated before being input to the GNN 96. However, in some other example embodiments of the disclosure, the spectral information 95 may also be aggregated with an output of the GNN 96. For example, as illustrated in FIG. 12, the processing system 10 may generate an intermediate embedding representation 125 by inputting node information 123 of a target graph 121 into a GNN 124, and may generate a final embedding representation 128 of the target graph 121 by aggregating the intermediate embedding representation 125 and the spectral information 126 (see 127). As described above, the spectral information 126 may be generated based on an adjacent matrix 122 of the target graph 121, and the pooling operation may be omitted in some cases.

So far, the example embodiments of the GNN-based graph embedding method have been described with reference to FIGS. 9 to 12. As described above, the embedding representation to which the structural characteristics (information) of the target graph are reflected may be accurately generated by aggregating the spectral information associated with the target graph and the node information (e.g., feature matrix) of the target graph and inputting the aggregated information into the GNN.

Hereinafter, a modified WL algorithm-based graph embedding method according to some example embodiments of the disclosure will be described with reference to FIGS. 13 and 14.

FIG. 13 is an example view illustrating a modified WL algorithm-based graph embedding method according to some example embodiments of the disclosure.

As illustrated in FIG. 13, the present example embodiments relate to a method of generating embedding representations (e.g., 134 and 138) of target graphs (e.g., 131 and 135) using a modified WL algorithm. Here, the modified WL algorithm may mean an algorithm modified to update a node label based more on spectral information (e.g., 133). For the modified portion, refer to an underlined portion of a pseudocode illustrated in FIG. 14. In addition, as described above, the WL algorithm refers to a technique that updates the label (information) of each node based on the label (information) of neighboring nodes until the node's division state becomes stable.

In the present example embodiment, the processing system 10 may generate an embedding representation (e.g., 134) of a target graph (e.g., 131) in a manner similar to the WL algorithm. For example, the processing system 10 may generate the embedding representations (e.g., 134 and 138) of the target graphs (e.g., 131 and 135) by repeatedly updating a label of each node based on node information (e.g., 132 and 136) and spectral information (e.g., 133 and 137) of the target graph (e.g., 131). For example, the processing system 10 may generate the embedding representation (e.g., 134) of the target graph (e.g., 131) based on a final label obtained through the repeated updating. The embedding representation (e.g., 134) may be a set of the final labels of each node, and may be generated by appropriately aggregating the final labels of each node.

For reference, the label of the node may be used interchangeably with terms such as "color information", "feature information", and "signature" in the relevant technical field.

In addition, the spectral information (e.g., 133) may or may not be reflected to an initial label of each node. In addition, the spectral information (e.g., 133) may be used in all steps of updating the node's label, or may be used only in some steps of updating the node's label.

When the embedding representation (e.g., 134) of the graph (e.g., 131) is generated, the processing system 10 may perform a predetermined task using the corresponding embedding representation (e.g., 134). For example, as illustrated, the processing system 10 may determine whether the two graphs correspond to isomorphic graphs by comparing the embedding representation 134 of the first graph 131 and the embedding representation 138 of the second graph 135. If the embedding representation 134 of the first graph 131 is the same as the embedding representation 138 of the second graph 135, the processing system 10 may determine that the two graphs 131 and 135 are isomorphic graphs. In the opposite case, the processing system 10 may determine that the two graphs 131 and 135 are not isomorphic graphs.

So far, the modified WL algorithm-based graph embedding method according to some example embodiments of the disclosure has been described with reference to FIGS. 13 and 14. As described above, by performing the modified WL algorithm based on the spectral information associated with the target graph and the node information of the target graph, the embedding representation to which the structural characteristics (information) of the target graph are reflected may be accurately generated, and the performance of isomorphism determination task may be further improved.

Hereinafter, the results of experiments performed by the inventors of the disclosure will be briefly described.

In order to check the performance of the above-described graph processing (or embedding) method (hereinafter referred to as the "proposed method"), the present inventors conducted an experiment using graphs that the existing WL algorithm may not distinguish. Specifically, FIGS. 15 and 16 illustrate graph pairs that the existing WL algorithm determines to be isomorphic even though the graph pairs are not isomorphic. The present inventors conducted an experiment to determine whether the graph pairs illustrated in FIGS. 15 and 16 are isomorphic. The present inventors calculated eigenvalue and angle information of the ego-graph for each node as spectral information, and generated an embedding representation for each of the graphs illustrated in FIGS. 15 and 16 based on the calculated spectral information. In this case, the embedding representation of each graph was generated based on GNN (see FIG. 9) and also based on the modified WL algorithm (see FIG. 13). In addition, the present inventors confirmed whether the embedding representations of the two graphs were differently generated. The experimental results are listed in Table 1 below.

[Table 1]

| Classification | FIG. 15 | FIG. 16 |
|---|---|---|
| GNN Based | Same x (Isomorphic x) | Same x (Isomorphic x) |
| Modified WL Algorithm Based | Same x (Isomorphic x) | Same x (Isomorphic x) |

Referring to Table 1, it may be confirmed that the embedding representations of the graph pairs illustrated in FIGS. 15 and 16 are differently generated. Through this, it may be confirmed that the performance of the proposed method exceeds that of the existing WL algorithm, and it may also be confirmed that when the spectral information is used, the embedding representation to which the structural characteristics (information) of the graph are reflected may be generated. That is, it may be confirmed that the expressive power of the embedding representation generated by the proposed method exceeds that of the existing WL algorithm, and it may also be confirmed that as the expressive power is strengthened, task performance is also improved. As well, it may also be confirmed that the GNN-based embedding representation has almost the same expressive power as the modified algorithm-based embedding representation.

So far, the performance experiment results for the method proposed by the present inventors have been briefly described. Hereinafter, an example computing device 170 capable of implementing the processing system 10 described above will be described with reference to FIG. 17.

FIG. 17 is an example hardware configuration diagram illustrating the computing device 170.

As illustrated in FIG. 17, the computing device 170 may include one or more processors 171, a bus 173, a communication interface 174, a memory 172 for loading a computer program executed by the processor 171, and a storage 175 for storing the computer program 176. However, only the components related to the example embodiments of the disclosure are illustrated in FIG. 17. Therefore, those skilled in the art to which the disclosure belongs may know that other general-purpose components may be further included in addition to the components illustrated in FIG. 17. That is, the computing device 170 may further include various components other than the components illustrated in FIG. 17. In addition, in some cases, the computing device 170 may also be configured in a form in which some of the components illustrated in FIG. 17 are omitted. Hereinafter, each component of the computing device 170 will be described.

The processor 171 may control an overall operation of each component of the computing device 170. The processor 171 may be configured to include at least one of a central processing unit (CPU), a micro processor unit (MPU), a micro controller unit (MCU), a graphic processing unit (GPU), or any type of processor well known in the art. In addition, the processor 171 may perform a calculation on at least one application or program for executing the operation/method according to various example embodiments of the disclosure. The computing device 170 may include one or more processors.

Next, the memory 172 stores various data, commands, and/or information. The memory 172 may load the computer program 176 from the storage 175 to execute the operations/methods according to various example embodiments of the disclosure. The memory 172 may be implemented as a volatile memory such as RAM, but the technical scope of the disclosure is not limited thereto.

Next, the bus 173 may provide a communications function between the components of the computing device 170. The bus 173 may be implemented as various types of buses, such as an address bus, a data bus, and a control bus.

Next, the communication interface 174 supports wired/wireless Internet communications of the computing device 170. In addition, the communication interface 174 may also support various communication methods other than Internet communications. To this end, the communication interface 174 may include a communication module well known in the art of the disclosure.

Next, the storage 175 may non-temporarily store one or more computer programs 176. The storage 175 may include a non-volatile memory such as a read only memory (ROM), an erasable programmable ROM (EPROM), an electrically erasable programmable ROM (EEPROM), or a flash memory, a hard disk, a removable disk, or any form of computer-readable recording medium well known in the art to which the disclosure pertains.

Next, the computer program 176 may include one or more instructions that when loaded into memory 172, cause the processor 171 to perform the operations/methods according to various example embodiments of the disclosure. That is, the processor 171 may perform the operations/methods according to various example embodiments of the disclosure by executing the loaded instructions.

For example, the computer program 176 may include one or more instructions for causing the processor to perform an operation of calculating spectral information associated with a target graph and an operation of generating an embedding representation of the target graph based on information on nodes constituting the target graph and the spectral information. In this case, the processing system 10 according to some example embodiments of the disclosure may be implemented through the computing device 170.

Meanwhile, in some example embodiments, the computing device 170 illustrated in FIG. 17 may also refer to a virtual machine implemented based on cloud technology. For example, the computing device 170 may be a virtual machine operating on one or more physical servers included in a server farm. In this case, at least some of the processor 171, the memory 172, and the storage 175 illustrated in FIG. 17 may be virtual hardware, and the communication interface 174 may also be implemented as a virtualized networking element such as a virtual switch.

Hereinabove, the example computing device 170 capable of implementing the processing system 10 according to some example embodiments of the disclosure has been described with reference to FIG. 17.

Hereinabove, various example embodiments of the disclosure and effects according to the example embodiments have been described with reference to FIGS. 1 to 17.

According to some example embodiments of the disclosure, an embedding representation of a target graph may be generated further based on spectral information (e.g., eigenvalues, eigenvectors, angle information, etc.) associated with the target graph. Accordingly, the embedding representation to which structural characteristics (information) of the target graph are reflected may be accurately generated. The embedding representation generated in this way may have stronger expressive power than an embedding representation generated through a graph neural network (GNN) (e.g., GIN) using the existing Weisfeiler-Lehman (WL) algorithm or neighbor node information aggregation method, and may improve the performance of various graph tasks For example, the performance of a task of determining isomorphism of graphs may be greatly improved.

In addition, spectral information may be calculated from an ego-graph for nodes constituting the target graph. Since the spectral information of the ego-graph includes abundant structural characteristics (information) of the target graph, the embedding representation to which the structural characteristics (information) of the target graph are reflected may be more accurately generated when the corresponding spectral information is used.

In addition, the spectral information may be calculated from a sub-graph (hereinafter, referred to as a "no-ego sub-graph") derived by removing an ego node from the ego-graph. Since the spectral information of the no-ego sub-graph also includes abundant structural characteristics (information) of the target graph, the embedding representation to which the structural characteristics (information) of the target graph are reflected may be more accurately generated when the corresponding spectral information is used.

In addition, in an ego-graph for nodes constituting the target graph, eigenvalue and angle information may be calculated as the spectral information. Since the eigenvalue and angle information imply eigenvalues of all sub-graphs from which one node is removed, there is no need to separately calculate eigenvalue of the no-ego sub-graph by using the eigenvalue and angle information. Accordingly, computing cost required to calculate the eigenvalue of the no-ego sub-graph may be reduced.

In addition, the embedding representation to which the structural characteristics (information) of the target graph are reflected may be accurately generated by aggregating spectral information associated with the target graph and node information (e.g., feature matrix) of the target graph and inputting the aggregated information into the GNN.

In addition, after a specific value is reflected to the spectral information (e.g., multiplication by an irrational number), the corresponding information may be aggregated with the node information of the target graph. In this case, since an offset of values of two pieces of information during the aggregation process may be prevented by the specific value, loss of information (or expressive power) during the aggregation process may be prevented. For example, by multiplying the spectral information by the irrational number, it is possible to effectively prevent the values of the two pieces of information from being offset during an aggregation (e.g., addition) process.

In addition, the specific value may be derived based on a learnable parameter. In this case, as embedding learning progresses, an optimal value capable of preventing loss of information (or expressive power) during the aggregation process may be naturally and accurately derived.

In addition, by performing the modified WL algorithm based on the spectral information associated with the target graph and the node information of the target graph, the embedding representation to which the structural characteristics (information) of the target graph are reflected may be accurately generated, and the performance of isomorphic determination task may be further improved.

Effects according to the technical idea of the disclosure are not limited to the effects mentioned above, and other effects that are not mentioned may be obviously understood by those skilled in the art from the following description.

The technical features of the disclosure described so far may be embodied as computer readable codes on a computer readable medium. The computer readable medium may be, for example, a removable recording medium (CD, DVD, Blu-ray disc, USB storage device, removable hard disk) or a fixed recording medium (ROM, RAM, computer equipped hard disk). The computer program recorded on the computer readable medium may be transmitted to other computing device via a network such as internet and installed in the other computing device, thereby being used in the other computing device.

Although operations are shown in a specific order in the drawings, it should not be understood that desired results may be obtained when the operations must be performed in the specific order or sequential order or when all of the operations must be performed. In certain situations, multitasking and parallel processing may be advantageous. According to the above-described embodiments, it should not be understood that the separation of various configurations is necessarily required, and it should be understood that the described program components and systems may generally be integrated together into a single software product or be packaged into multiple software products.

In concluding the detailed description, those skilled in the art will appreciate that many variations and modifications may be made to the example embodiments without substantially departing from the principles of the disclosure. Therefore, the disclosed example embodiments of the disclosure are used in a generic and descriptive sense only and not for purposes of limitation.

**Claims**

1. A method for processing a graph performed by at least one computing device, the method comprising:

   calculating spectral information associated with a target graph; and
   generating an embedding representation of the target graph based on information on nodes constituting the target graph and the spectral information.

2. The method of claim 1, wherein the calculating of the spectral information comprises:

   deriving an ego-graph for at least some of the nodes from the target graph; and
   calculating spectral information of the ego-graph.

3. The method of claim 2, wherein the spectral information of the ego-graph comprises at least one of an eigenvalue and an eigenvector of the ego-graph.

4. The method of claim 2, wherein the spectral information of the ego-graph comprises angle information of the ego-graph.

5. The method of claim 1, wherein the calculating of the spectral information comprises:

   deriving an ego-graph for at least some of the nodes from the target graph;
   deriving a sub-graph from which an ego node is removed from the ego-graph; and
   calculating spectral information of the derived sub-graph.

6. The method of claim 1, wherein the generating of the embedding representation of the target graph comprises:

   performing repetitive node label updating according to Weisfeiler-Lehman (WL) algorithm based on the information on the nodes and the spectral information; and
   generating the embedding representation based on a final label of the nodes obtained through the node label updating.

**7.** The method of claim 6, wherein the target graph comprises a first graph and a second graph, and the method further comprises:
determining whether the first graph and the second graph are isomorphic graphs by comparing an embedding representation of the first graph and an embedding representation of the second graph.

**8.** The method of claim 1, wherein the generating of the embedding representation of the target graph comprises:

aggregating the information of the nodes and the spectral information; and
generating the embedding representation by inputting the aggregated information into a graph neural network (GNN),
wherein the GNN is a neural network configured to generate an embedding representation of a graph by aggregating information of neighboring nodes.

**9.** The method of claim 8, wherein the spectral information is information in a form of a multi-set comprising a plurality of spectral elements, and
the aggregating of the information of the nodes and the spectral information comprises:

transforming the spectral information through a neural network module that transforms data in a form of multi-set into data in a form of vector or matrix; and
aggregating the transformed spectral information and the information on the nodes.

**10.** The method of claim 8, wherein the aggregating of the information of the nodes and the spectral information comprises:

changing a value of any one of the information of the nodes and the spectral information by reflecting a specific value to any one of the information of the nodes and the spectral information; and
aggregating any changed information and other information.

**11.** The method of claim 10, wherein the specific value is an irrational number, and

wherein the reflecting of the specific value is performed based on a multiplication operation, and
the aggregating of any changed information and other information is performed based on an addition operation.

**12.** The method of claim 10, wherein the specific value is a value based on a learnable parameter, and
the method further comprises:

predicting a label for a predetermined task based on the generated embedding representation; and
updating the value of the learnable parameter based on a difference between the predicted label and a correct label.

**13.** The method of claim 8, wherein the aggregating is performed based on a concatenation operation.

**14.** The method of claim 1, wherein the generating of the embedding representation of the target graph comprises:

generating an intermediate embedding representation of the target graph by inputting the information of the nodes into a graph neural network (GNN); and
generating the embedding representation by aggregating the intermediate embedding representation and the spectral information.

**15.** A system for processing a graph, the system comprising:

one or more processors; and
a memory configured to store one or more instructions,
wherein the one or more processors, by executing the stored one or more instructions, perform:

calculating spectral information associated with a target graph; and
generating an embedding representation of the target graph based on information on nodes constituting the target graph and the spectral information.

**FIG. 1**

FIG. 2

**FIG. 3**

```
                        ┌─────────────┐
                        │    START    │
                        └──────┬──────┘
                               │
                               ▼
┌────────────────────────────────────────────────────────────────┐
│   CALCULATE SPECTRAL INFORMATION ASSOCIATED WITH TARGET GRAPH    │──S31
└────────────────────────────────┬───────────────────────────────┘
                                 │
                                 ▼
┌────────────────────────────────────────────────────────────────┐
│          GENERATE EMBEDDING REPRESENTATION OF TARGET GRAPH       │──S32
│       BASED ON SPECTRAL INFORMATION AND NODE INFORMATION         │
└────────────────────────────────┬───────────────────────────────┘
                                 │
                                 ▼
┌────────────────────────────────────────────────────────────────┐
│          PERFORM PREDETERMINED TASK USING EMBEDDING             │──S33
│              REPRESENTATION OF TARGET GRAPH                      │
└────────────────────────────────┬───────────────────────────────┘
                                 │
                                 ▼
                        ┌─────────────┐
                        │     END     │
                        └─────────────┘
```

**FIG. 4**

41

G

U(G, v₁,0)

U(G, v₁,0)

42

**FIG. 5**

$E_{V_1,G}$

$V_1$ REMOVE

$E'_{V_1,G}$

**FIG. 6**

$E_{v_1,G}$

$S(E_{v_1,G},V_1)$     $S(E_{v_1,G},V_2)$     $S(E_{v_1,G},V_5)$

**FIG. 7**

$A(G) \in R^{nxn}$

G

DERIVE EGO-GRAPH

$A(E_i,G) \in R^{(deg(i)+1)x(deg(i)+1)}$

CALCULATE SPECTRAL INFORMATION

SPECTRAL INFORMATION

TRANSFORMATION

SPECTRAL INFORMATION (TRANSFORMED)

**FIG. 8**

81

82

83

$\in \mathbb{R}^s$   84

deg(i)+1

MLP

deg(i)+1

$\oplus$

$EA^{(i)} \in \mathbb{R}^{(deg(i)+1) \times 2}$

$\phi: \mathbb{R}^2 \to \mathbb{R}^s$

$\in \mathbb{R}^{(deg(i)+1) \times s}$

$EA^{(i)} = \{(\mu_k, \alpha_{ki}) \mid k = 1, \ldots, deg(i) + 1\}$
for each $A(Ei, G)$

85

86

MLP

$SA^{(i)} \in \mathbb{R}^d$

$\rho: \mathbb{R}^s \to \mathbb{R}^d$

For each $i = 1, \ldots, n,$

$$SA^{(i)} = \rho \left( \sum_{l \in EA^{(i)}} \phi(l) \right)$$

**FIG. 9**

**FIG. 10**

92

95

$F(G)$

$(1 + \varepsilon)$

94

SPECTRAL
INFORMATION
(TRANSFORMED)

**FIG. 11**

**FIG. 12**

FIG. 13

**FIG. 14**

**Input**: initial node label(coloring) $(x_1^{(0)},\ldots,x_{|V|}^{(0)})$, spectral representation $(sa_1,\ldots,sa_{|V|})$

**Output**: final node label(coloring) $(x_1^{(T)},\ldots,x_{|V|}^{(T)})$

$t \leftarrow 0;$

**repeat**

  **for** $i \in [1,\ldots,|V|]$ **do**

$$x_i^{(t+1)} \leftarrow hash\left(x_i^{(t)}, \left\{\left\{x_j^{(t)} \,\middle|\, j \in Neighbor(i)\right\}\right\}, \underline{sa_i}\right);$$

  $t \leftarrow t+1;$

**until** stable node label(coloring) is reached;

**FIG. 15**

**FIG. 16**

**FIG. 17**

170

171 PROCESSOR

173

174 COMMUNICATION INTERFACE

172 MEMORY

COMPUTER PROGRAM

176

B U S

175 STORAGE

COMPUTER PROGRAM

176

| | Europäisches Patentamt European Patent Office Office européen des brevets | **EUROPEAN SEARCH REPORT** | Application Number EP 23 20 8703 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | L. ZHAO ET AL: "From stars to subgraphs: uplifting any GNN with local structure awareness", ARXIV.ORG, CORNELL UNIVERSITY LIBRARY, 201 OLIN LIBRARY CORNELL UNIVERSITY ITHACA, NY 14853, 20 April 2022 (2022-04-20), XP091194610, DOI: 10.48550/arXiv.2110.03753 * sections 1 and 3-5; appendix A.1 * ----- | 1-15 | INV. G06N3/042 G06N5/01 ADD. G06N3/0499 |
| A | C. T. DUONG ET AL: "Efficient streaming subgraph isomorphism with graph neural networks", PROCEEDINGS OF THE VLDB ENDOWMENT, vol. 14, no. 5, 1 January 2021 (2021-01-01), pages 730-742, XP093146224, DOI: 10.14778/3446095.3446097 * sections 2 and 3 * ----- | 1-15 | |
| A | Q. ZHU ET AL: "Transfer learning of graph neural networks with ego-graph information maximization", ARXIV.ORG, CORNELL UNIVERSITY LIBRARY, 201 OLIN LIBRARY CORNELL UNIVERSITY ITHACA, NY 14853, 26 October 2021 (2021-10-26), XP091063695, DOI: 10.48550/arXiv.2009.05204 * section 3 * ----- -/-- | 1-15 | TECHNICAL FIELDS SEARCHED (IPC) G06N |

The present search report has been drawn up for all claims

| Place of search | Date of completion of the search | Examiner |
|---|---|---|
| The Hague | 27 March 2024 | Douarche, Nicolas |

EPO FORM 1503 03.82 (P04C01)

Europäisches
Patentamt

European
Patent Office

Office européen
des brevets

# EUROPEAN SEARCH REPORT

**Application Number**

EP 23 20 8703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | S. VERMA, Z.-L. ZHANG: "Learning universal graph neural network embeddings with aid of transfer learning", ARXIV.ORG, CORNELL UNIVERSITY LIBRARY, 201 OLIN LIBRARY CORNELL UNIVERSITY ITHACA, NY 14853, 27 November 2019 (2019-11-27), XP081540293, DOI: 10.48550/arXiv.1909.10086 * section 3 * | 1-15 | |

TECHNICAL FIELDS
SEARCHED      (IPC)

The present search report has been drawn up for all claims

| Place of search | Date of completion of the search | Examiner |
|---|---|---|
| The Hague | 27 March 2024 | Douarche, Nicolas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
........................................................
& : member of the same patent family, corresponding
    document

EPO FORM 1503 03.82 (P04C01)